# EUROPÄISCHE PATENTSCHRIFT

(11) **EP 3 732 371 B1**
(45) Veröffentlichungstag und Bekanntmachung des Hinweises auf die Patenterteilung: **24.04.2024**
(21) Anmeldenummer: 18833072.4
(22) Anmeldetag: 28.12.2018
(51) Int. Cl.: F03D 17/00, G01M 7/02

(54) **VERFAHREN ZUM KALIBRIEREN VON NOMINALFREQUENZEN**
METHOD FOR CALIBRATING NOMINAL FREQUENCIES
PROCÉDÉ POUR ÉTALONNER DES FRÉQUENCES NOMINALES

(30) Priorität: 28.12.2017 DE 102017131389
(43) Veröffentlichungstag der Anmeldung: 04.11.2020
(73) Patentinhaber: VC VIII Polytech Holding ApS, 6740 Bramming (DK)
(72) Erfinder: SCHAUSS, Thomas, 82205 Gilching (DE); RIEGER, Florian, 80331 München (DE)
(74) Vertreter: Zacco Denmark A/S
(86) Internationale Anmeldenummer: PCT/EP2018/097078
(87) Internationale Veröffentlichungsnummer: WO 2019/129849

(56) Entgegenhaltungen:
- EP-A1- 2 746 885
- WO-A1-2014/124725
- WO-A1-2016/087455

## Beschreibung

Ausführungsformen der vorliegenden Erfindung betreffen im Allgemeinen eine Betriebsmodalanalyse, und betreffen insbesondere ein Verfahren zum Kalibrieren von Nominalfrequenzen bei der Betriebsmodalanalyse. Mit einem derartigen Verfahren lassen sich beispielsweise Rotorblätter von Windkraftanlagen oder andere sich bewegende Strukturen hinsichtlich ihrer Schwingungseigenschaften überwachen.

Die Analyse von Eigenfrequenzen oder Eigenmoden eines Systems liefert wichtige Aussagen über beispielsweise dessen Struktur und dessen Schwingungsverhalten. Sind diese Eigenfrequenzen oder Eigenmoden einmal bekannt, so lässt sich bei Abweichungen auf eine Veränderung des Zustands der Systemstruktur schließen. Viele Systeme weisen variable Betriebsparameter auf oder werden unter unterschiedlichen Umweltparametern betrieben. Dies ist unter anderem bei Rotorblättern von Windkraftanlagen der Fall, bei welchen sich beispielsweise Rotordrehzahl, Pitchwinkel, Flächenbelastung, Anströmwinkel, Anströmgeschwindigkeit etc. in kurzen Zeitabständen ändern können. Neben Änderungen an diesen Betriebsparametern sind auch äußere Einflüsse, d.h. Umweltparameter wie Windverhältnisse, Temperaturen, Eisbelag, Feuchtigkeit etc. ständigen Variationen unterworfen. Die Eigenfrequenzen und Eigenmoden des Systems sind somit abhängig von den Betriebs- bzw. Umweltparametern, wobei sich eine derartige Abhängigkeit für jede Eigenfrequenz oder Eigenmode unterscheidet. WO 2014/124725 A1 offenbart beispielsweise ein Überprüfungsverfahren für eine Windenergieanlage, bei dem aus erfassten Rotorblattschwingungen wenigstens eine momentane Eigenfrequenz des Rotorblatts ermittelt wird. Darüber hinaus werden Umweltparameter und/oder Betriebsparameter erfasst, durch welche die Eigenfrequenz beeinflusst wird.

Um eine mögliche Detektion der Eigenfrequenzen und Eigenmoden zur Überwachung einer schwingfähigen Struktur wie beispielsweise eines Rotorblatts einer Windkraftanlage nutzen zu können, ist es vorteilhaft, wenn Nominalmoden bekannt sind. Darüber hinaus ist es wünschenswert, diese Nominalmoden in einem automatisierten Verfahren abhängig von Betriebs- bzw. Umweltparametern festzulegen.

Gemäß einer Ausführungsform wird ein Verfahren zum Überwachen eines schwingfähigen Systems bereitgestellt, umfassend ein Erfassen von Schwingungseigenmoden des schwingfähigen Systems in Abhängigkeit von mindestens einem Betriebsparameter und/oder in Abhängigkeit von mindestens einem Umweltparameter des schwingfähigen Systems in mindestens einem Betriebsbereich; ein Erstellen einer Häufigkeitsverteilung der erfassten Schwingungseigenmoden in Abhängigkeit einer Modenfrequenz und des mindestens einen Betriebsparameters und/oder des mindestens einen Umweltparameters in dem Betriebsbereich; in Abhängigkeit von der erstellten Häufigkeitsverteilung, ein Einteilen der Schwingungseigenmoden in Frequenzklassen, wobei das Einteilen der Schwingungseigenmoden in Frequenzklassen durch Bestimmen eines Spitzenwerts derjenigen Häufigkeitsverteilung von Eigenmoden durchgeführt wird, welcher eine vorbestimmte Schwelle überschreitet und welcher eine Stetigkeit über den gesamten Betriebsbereich aufweist; und in mindestens einer Frequenzklasse, ein Bestimmen eines Modenverlaufs über dem Betriebsparameter und/oder über dem Umweltparameter.

Gemäß einer Ausführungsform wird ein Verfahren zum Überwachen eines schwingfähigen Systems bereitgestellt. Das Verfahren beinhaltet: Erfassen von Schwingungseigenmoden des schwingfähigen Systems in Abhängigkeit von mindestens einem Betriebsparameter und/oder in Abhängigkeit von mindestens einem Umweltparameter des schwingfähigen Systems in mindestens einem Betriebsbereich; Erstellen einer Häufigkeitsverteilung der erfassten Schwingungseigenmoden in Abhängigkeit einer Modenfrequenz und des mindestens einen Betriebsparameters und/oder des mindestens einen Umweltparameters in dem Betriebsbereich; in Abhängigkeit von der erstellten Häufigkeitsverteilung, Einteilen der Schwingungseigenmoden in Frequenzklassen, wobei das Einteilen der Schwingungseigenmoden in Frequenzklassen durch Bestimmen eines Spitzenwerts derjenigen Häufigkeitsverteilung von Eigenmoden durchgeführt wird, welcher eine vorbestimmte Schwelle überschreitet und welcher eine Stetigkeit über den gesamten Betriebsbereich aufweist; und in mindestens einer Frequenzklasse, Bestimmen eines Modenverlaufs über dem Betriebsparameter und/oder über dem Umweltparameter.

Gemäß einer weiteren Ausführungsform wird ein Hardwaremodul bereitgestellt, umfassend ein Computerprogramm, das ausgelegt ist, das Verfahren zum Überwachen eines schwingfähigen Systems durchzuführen.

Ausführungsbeispiele sind in den Zeichnungen dargestellt und in der nachfolgenden Beschreibung näher erläutert. In den Zeichnungen zeigen:
Figur 1 schematisch ein Blockdiagramm zur Erläuterung des Verfahrens gemäß einer Ausführungsform;
Figur 2 ein durch das Verfahren gemäß der in Figur 1 gezeigten Ausführungsform erhaltenes Histogramm in größerem Detail; und
Figur 3 ein schematisches Ablaufdiagramm zur Veranschaulichung des Verfahrens zum Überwachen eines schwingfähigen Systems gemäß einer Ausführungsform.

In den Zeichnungen bezeichnen gleiche Bezugszeichen gleiche oder funktionsgleiche Komponenten oder Schritte.

Im Folgenden wird detaillierter Bezug genommen auf verschiedene Ausführungsformen der Erfindung, wobei ein oder mehrere Beispiele in den Zeichnungen veranschaulicht sind.

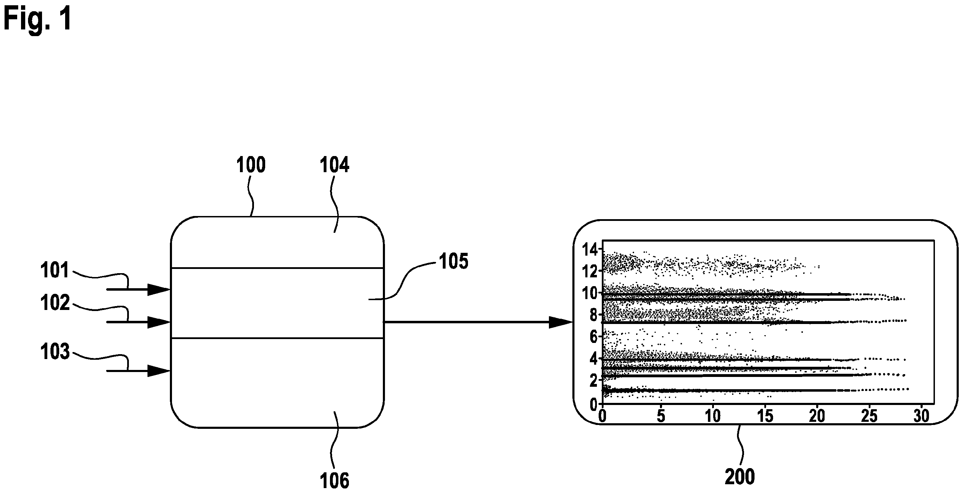

Figur 1 zeigt schematisch ein Übersichts-Blockdiagramm zur Erläuterung des Verfahrens gemäß einer Ausführungsform. In einem Analyseschritt 100 erfolgt eine automatische Erkennung relevanter Eigenmoden, eine automatische Einteilung in Betriebsbereiche sowie eine Modellierung der Eigenmoden in Abhängigkeit von den Betriebsparametern. Hierzu können sowohl Betriebsparameter 101 als auch Umweltparameter 102 eingegeben werden. Ferner sind gemessene Eigenmoden 103 gemäß Ausführungsformen des untenstehend beschriebenen Verfahrens bekannt und können ebenfalls im Analyseschritt 100 verarbeitet werden.

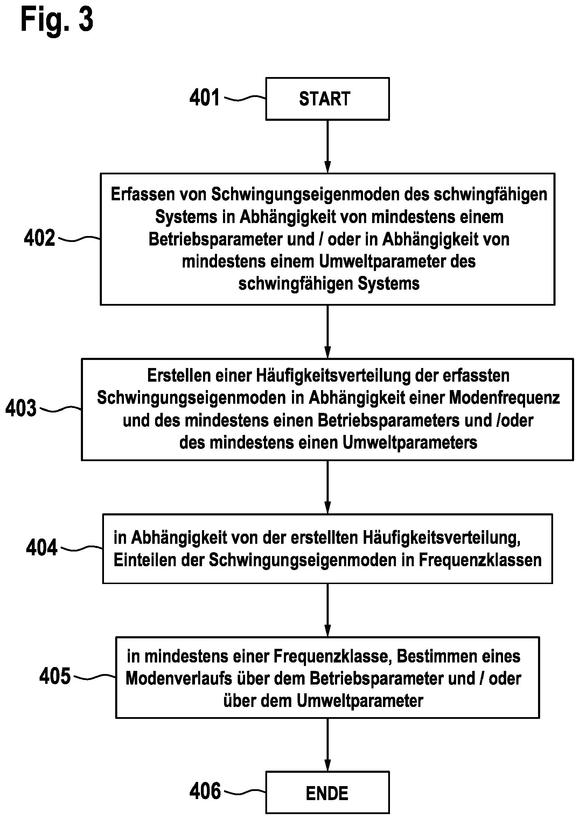

Im Rahmen des Analyseschritts 100 werden in einem Eigenmoden-Erkennungsschritt 104 relevante Eigenmoden erkannt, wie dies untenstehend unter Bezugnahme auf Figur 3 erläutert wird. Ferner umfasst der Analyseschritt 100 einen Betriebsbereich-Einteilungsschritt 105, welcher dazu dient, eine automatische Einteilung in Betriebsbereiche vorzunehmen. Ferner erfolgt in dem Analyseschritt 100 eine Modellierung von Eigenmoden über ausgewählten Betriebsparametern und/oder Umweltparametern in einem Modellierungsschritt 106. Nach dem in Figur 1 gezeigten Analyseschritt 100 erfolgt ein Kalibrier- und Modellierungsschritt, der mit den aus dem Analyseschritt 100 ausgegebenen Daten auf Grundlage einer Häufigkeitsverteilung 200 eine automatisierte oder zumindest teilweise automatisierte Erkennung relevanter Eigenmoden bereitstellen kann.

Gemäß einer Ausführungsform, welche mit anderen hierin beschriebenen Ausführungsformen kombiniert werden kann, werden bei einer automatischen Kalibrierung der Nominalfrequenzen bei der Betriebsmodalanalyse sogenannte Histogramme herangezogen. Ein derartiges Histogramm ist insbesondere dafür ausgelegt, nicht nur zusammenfassende Messdaten wie beispielsweise einen arithmetischen Mittelwert und eine zugehörige Standardabweichung darzustellen, sondern auch einen Verlauf der erfassten Häufigkeitsverteilung anzugeben. Somit lassen sich bei späteren Abweichungen von erfassten Nominaleigenmoden Rückschlüsse ziehen auf Veränderung eines Zustands der untersuchten Struktur wie beispielsweise eines Rotorblatts einer Windkraftanlage. Die Abhängigkeit von Nominaleigenmoden in Bezug auf Betriebsparameter der untersuchten Struktur und/oder Umweltparameter in der Umgebung der untersuchten Struktur kann für unterschiedliche Eigenmoden variieren.

In dem Verfahren gemäß hierin beschriebenen Ausführungsformen umfasst das Erstellen einer Häufigkeitsverteilung das Erstellen eines Histogramms. Ein derartiges Histogramm stellt hierbei eine übersichtliche Grafik zur Häufigkeitsverteilung bestimmter skalierter Merkmale dar. Zur Erstellung eines Histogramms werden gewonnene Messdaten in Klassen eingeteilt, wobei die Klassen eine konstante oder eine variable Breite aufweisen können. Damit ergeben sich direkt nebeneinanderliegende Bereiche, welche einen Gesamtinhalt aufweisen, der einer relativen oder absoluten Klassenhäufigkeit entspricht. Dabei kann ein Maximalwert eines Bereichs eine relative oder absolute Häufigkeitsdichte darstellen. Die Häufigkeitsdichte kann somit die relative oder absolute Häufigkeit bezogen auf die Breite der entsprechenden Klasse definieren.

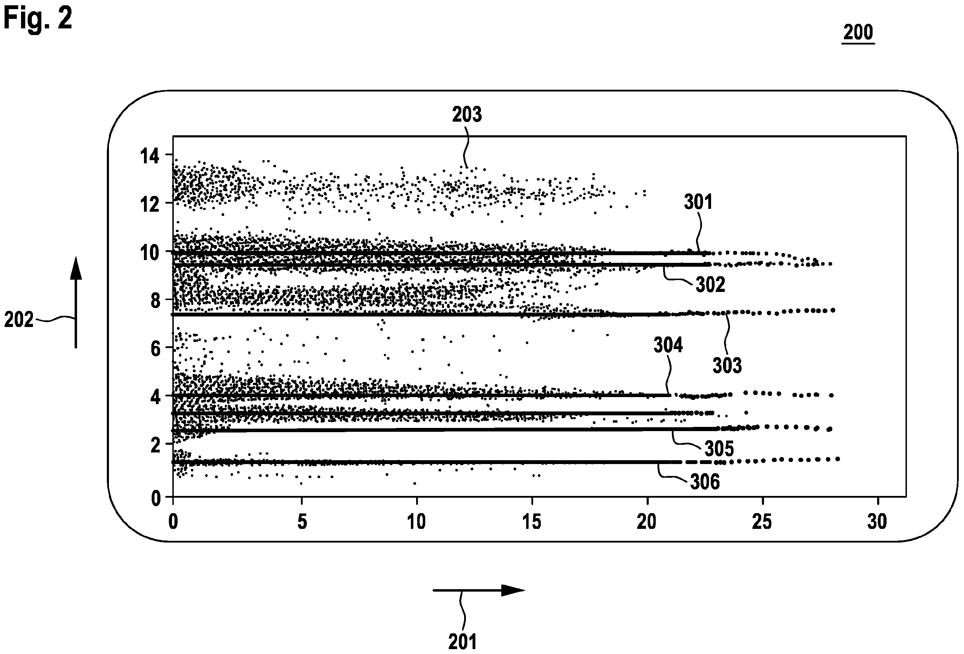

In Figur 2 ist ein durch das Verfahren gemäß der in Figur 1 gezeigten Ausführungsform erhaltenes Histogramm detaillierter dargestellt. Figur 2 veranschaulicht unterschiedliche Häufigkeitsverteilungen in spezifischen Frequenzklassen, wobei hier beispielhaft die x-Achse einen Betriebsparameterverlauf 201 und die y-Achse eine Frequenzbereichseinteilung 202 repräsentiert. Bei der in Figur 2 beispielhaft dargestellten Messung sind deutlich unterschiedliche Modenverläufe 301, 302, 303, 304, 305, 306, ... in unterschiedlichen Frequenzbereichen bzw. Frequenzklassen 202 erkennbar. In dem Kalibrier- und Modellierungsschritt 200 können Verläufe der Eigenmoden mit Hilfe einer linearen Least-Squares-Approximation modelliert werden. Dabei kann ein Polynom eines beliebigen Grades an einzelne Modenverläufe angepasst werden. Hierbei ist es möglich, entweder nur den Frequenzverlauf oder auch den kombinierten Verlauf von Frequenz und Modenform über die einzelnen Parameter, d.h. Betriebsparameter und/oder Umweltparameter anzupassen.

Die einzelnen Modenverläufe 301, 302, 303, 304, 305, 306, ... ergeben sich aus den Häufigkeitsverteilungen von Einzel-Eigenfrequenzen 203, die als einzelne Messpunkte in dem in Figur 2 gezeigten Diagramm dargestellt sind. Die Eigenfrequenzen 203 sind damit die tatsächlich auftretenden Frequenzen in dem schwingfähigen System. Das Histogramm wird dann zum Sortieren der Einzel-Eigenfrequenzen 203 herangezogen, indem einzelne Frequenzklassen definiert werden.

Figur 3 schließlich zeigt ein schematisches Ablaufdiagramm zur Darstellung eines Verfahrens zum Überwachen eines schwingfähigen Systems gemäß einer Ausführungsform. Der gemäß dem Verfahren ablaufende Prozess startet bei einem Block 401. In einem anschließenden Block 402 werden Schwingungsmoden des schwingfähigen Systems in Abhängigkeit von mindestens einem Betriebsparameter des schwingfähigen Systems und/oder in Abhängigkeit von mindestens einem Umweltparameter einer Umgebung des schwingfähigen Systems erfasst. Eine derartige Erfassung kann beispielsweise mit Schwingungssensoren, insbesondere faseroptischen Schwingungssensoren, bevorzugt Faser-Bragg-Gitter-Sensoren durchgeführt werden.

Der Prozess schreitet zu einem Block 403 fort, in dem eine Häufigkeitsverteilung der erfassten Schwingungseigenmoden in Abhängigkeit einer Modenfrequenz und des mindestens einen Betriebsparameters und/oder des mindestens einen Umweltparameters erstellt wird. Eine derartige Häufigkeitsverteilung kann auf Grundlage eines Histogramms ausgewertet werden. Hierbei ist es möglich, wie in einem Block 404 dargestellt, die Schwingungseigenmoden in Abhängigkeit von der erstellten Häufigkeitsverteilung in Frequenzklassen einzuteilen.

In einem anschließenden Block 405 wird in mindestens einer Frequenzklasse ein Modenverlauf über dem Betriebsparameter und/oder ein Modenverlauf über dem Umweltparameter bestimmt. Ein derartiger Modenverlauf kann zu einer automatischen Festlegung bzw. Kalibrierung von Nominalmoden herangezogen werden. Damit wird eine Abschätzung eines Verhaltens bzw. eines Verlaufs von Schwingungseigenmoden über dem gewählten Parameter ermöglicht. Die Prozedur endet in einem Block 406.

Mit anderen Worten werden automatisiert oder halbautomatisiert relevante Eigenmoden identifiziert, wobei der gesamte Betriebsbereich in Frequenzklassen eingeteilt wird. Für jede einzelne Klasse kann nunmehr eine Modellierung der Eigenmoden in Abhängigkeit von den Betriebsparametern bzw. den Umweltparametern bereitgestellt werden. Bei der Verarbeitung der Daten wird die Identifizierung relevanter Eigenmoden vorgenommen. Das dargestellte Histogramm 200 über sämtliche aufgezeichneten Eigenfrequenzen und Modenformen liefert hierfür die Grundlage.

In dem in Figur 1 gezeigten Histogramm 200 ist gemäß einem Ausführungsbeispiel auf der x-Achse die Rotorgeschwindigkeit in Umdrehungen pro Minute aufgetragen, während die y-Achse die Frequenzklassen (Frequenzbereiche) in Hertz anzeigt. Mithilfe eines Algorithmus zur Spitzenwertfindung, der beispielsweise als eine Kernel-Density-Funktion oder eine Nullstellenstellensuche in der Ableitung bereitgestellt werden kann, erfolgt die Bestimmung relevanter Eigenmoden. Ob eine Eigenmode relevant ist oder nicht, ergibt sich daraus, ob die Spitzenwerte der Eigenmoden klar unterscheidbar sind und/oder ob ihr Spitzenwert eine vorbestimmte Schwelle überschreitet.

Gemäß einer Ausführungsform, welche mit anderen hierin beschriebenen Ausführungsformen kombiniert werden kann, erfolgt die Überwachung von Betriebsparametern bzw. Umweltparametern kontinuierlich oder diskontinuierlich, d.h. in bestimmten Zeitintervallen. Die eingestellten Betriebsparameter und/oder die vorhandenen Umweltparametern können den Betrieb einer Windkraftanlage wesentlich beeinflussen. Beispielsweise ist es möglich, dass bei ungünstigen Verhältnissen Flatterbewegungen eines oder mehrerer Rotorblätter auftreten.

Gemäß Ausführungsformen, die mit anderen hierin beschriebenen Ausführungsformen kombiniert werden können, kann das Durchführen einer Bestimmung der Schwingungseigenmoden ein Erfassen von Fremdmaterial auf einem Rotorblatt einer Windenergieanlage umfassen. Beispielsweise kann eine Beaufschlagung eines Rotorblatts mit Fremdmaterial bestimmt werden, in dem eine Veränderung einer Eigenfrequenz innerhalb einer Frequenzklasse detektiert wird.

Gemäß einer weiteren Ausführungsform, welche mit hierin beschriebenen Ausführungsformen kombiniert werden kann, können die in einer Frequenzklasse erfassten Schwingungseigenmoden bzw. der in einer Frequenzklasse erfasste Modenverlauf mit einem Sollwert bzw. mit Sollwerten verglichen werden, um Abweichungen in einem Betriebsverhalten und Änderungen von Umweltparametern in der Umgebung des Rotorblatts bzw. der Windkraftanlage zu detektieren.

Gemäß einer Ausführungsform, welche mit anderen hierin beschriebenen Ausführungsformen kombiniert werden kann, ist der mindestens eine Betriebsparameter des schwingfähigen Systems gewählt aus der Gruppe, welche besteht aus: einer Rotorgeschwindigkeit, einem Anstellwinkel eines Rotorblatts, einem Anströmwinkel, einem Pitchwinkel eines Rotorblatts, einem Yaw-Winkel einer Rotorgondel, einer Generatordrehzahl, einer Generatorleistung, und jedweder Kombination davon.

Ein Betriebsparameter kann beispielsweise der Anstellwinkel eines Rotorblatts oder der Pitchwinkel sein. Typischerweise wird der Anstellwinkel bezüglich einer Referenzebene definiert. Der Pitchwinkel kann eine Winkeleinstellung eines Rotorblatts bezüglich einer Rotornabe definieren, an welcher das Rotorblatt drehbar gelagert ist.

Gemäß einer weiteren Ausführungsform, welche mit anderen hierin beschriebenen Ausführungsformen kombiniert werden kann, ist der mindestens eine Umweltparameter aus der Umgebung des schwingfähigen Systems gewählt aus der Gruppe, welche besteht aus: der Umgebungstemperatur, einem Eisbelag an einem Rotorblatt, einer Beaufschlagung eines Rotorblatts mit Fremdmaterial, einer Luftfeuchtigkeit, einem Winddruck, einer Windrichtung, einer Windgeschwindigkeit, einer Flächenbelastung an einem Rotorblatt, einem Anströmwinkel, einer Anströmgeschwindigkeit, einer Druckdifferenz, einer Rotorblatttemperatur, einer Rotorblattsteifigkeit, einer Rotorblattmassenverteilung, und jedweder Kombination davon.

Ein Winddruck kann als eine Flächenbelastung an einer spezifischen Stelle eines Rotorblatts angegeben werden. Ferner kann die Windgeschwindigkeit eine absolute Windgeschwindigkeit angeben. Ein Anströmwinkel kann einen Winkel zwischen einer durch das Rotorblatt definierten Ebene und einer Windrichtung angeben. Eine Anströmgeschwindigkeit kann eine relative Geschwindigkeit oder eine relative mittlere Geschwindigkeit definieren, mit der Umgebungsluft auf das Rotorblatt trifft.

Gemäß einer Ausführungsform, welche mit anderen hierin beschriebenen Ausführungsformen kombiniert werden kann, werden gemäß dem Verfahren zum Überwachen eines schwingfähigen Systems, wie beispielsweise eines Rotorblatts, zunächst Schwingungseigenmoden des schwingfähigen Systems in Abhängigkeit von mindestens einem Betriebsparameter und/oder in Abhängigkeit von mindestens einem Umweltparameter des schwingfähigen Systems erfasst. Eine derartige Erfassung kann beispielsweise mit Schwingungssensoren, insbesondere faseroptischen Schwingungssensoren erfolgen. Nach einer Erfassung der Schwingungseigenmoden werden diese in einer Häufigkeitsverteilung dargestellt, d.h. es wird eine Häufigkeitsverteilung der erfassten Schwingungseigenmoden in Abhängigkeit einer Modenfrequenz und des mindestens einen Betriebsparameters und/oder des mindestens einen Umweltparameters erstellt.

Die erstellte Häufigkeitsverteilung dient nun als Grundlage zum Einteilen der Schwingungseigenmoden in Frequenzklassen. Hierbei erfolgt ein Einteilen der Schwingungseigenmoden in Abhängigkeit von der erstellten Häufigkeitsverteilung in die Frequenzklassen. Anschließend ist es möglich, in den jeweiligen Frequenzklassen einen Modenverlauf über dem Betriebsparameter und/oder über dem Umweltparameter zu bestimmen. Das Verfahren gemäß einer Ausführungsform erfasst in mindestens einer Frequenzklasse den Modenverlauf über dem Betriebsparameter, dem Umweltparameter, oder über sowohl dem Betriebsparameter als auch dem Umweltparameter.

Die Unterteilung in Frequenzklassen bzw. eine Unterteilung des gesamten Betriebsbereich erfolgt auf Basis einer Untersuchung, bei der eine Stetigkeit der erhaltenen Spitzenwerte über den gesamten Bereich überprüft wird. Falls es bei bestimmten Moden zu Sprüngen kommt, oder falls diese verschwinden und dafür neue Moden auftauchen, wird der Betriebsbereich an dieser Stelle aufgeteilt.

Gemäß einer weiteren Modifikation erfolgt die Unterteilung der Schwingungseigenmoden in Frequenzklassen durch ein Bestimmen derjenigen Häufigkeitsverteilung von Eigenmoden, welche eine vorbestimmte Schwelle überschreitet. In diesem Zusammenhang ist es wesentlich, dass die Spitzenwerte der Eigenmoden unterschieden werden können, wobei diejenigen Spitzenwerte identifiziert werden, die die vorbestimmte Schwelle überschreiten. Mit anderen Worten kann die Feststellung, ob eine Eigenmode relevant ist oder nicht, aus der Tatsache abgeleitet werden, dass die Spitzenwerte der Eigenmoden klar unterscheidbar sind und/oder dass ein entsprechender Spitzenwert eine vorbestimmte Schwelle überschreitet.

Gemäß einer Ausführungsform, welche mit anderen hierin beschriebenen Ausführungsformen kombiniert werden kann, erfolgt das Erfassen von Schwingungseigenmoden des schwingfähigen Systems hinsichtlich Eigenfrequenzen, Modenformen und Dämpfungen. Darüber hinaus ist es möglich, einen Modenwinkel einzelner Eigenmoden zu bestimmen. Mit anderen Worten umfasst das Erfassen von Schwingungseigenmoden des schwingfähigen Systems ein Erfassen von Eigenfrequenzen und/oder Modenformen und/oder Dämpfungen und/oder Modenwinkeln.

Gemäß einer Modifikation, die mit hierin beschriebenen Ausführungsformen kombiniert werden kann, kann das Erfassen von Schwingungseigenmoden des schwingfähigen Systems in Kombination mit mindestens einem von folgenden erfolgen: einer oder mehreren Eigenfrequenzen, Modenformen, Modenwinkeln und Dämpfungen. Frequenz und/oder Modenformen können somit über einzelne Parameter wie beispielsweise Betriebsparameter oder Umweltparameter gefittet werden.

Gemäß einer weiteren Ausführungsform, welche mit anderen hierin beschriebenen Ausführungsformen kombiniert werden kann, basiert ein Überwachen von Betriebsparametern einer Windkraftanlage und/oder Umweltparametern in der Umgebung der Windkraftanlage auf einem Kalibrieren von Nominalfrequenzen. Gemäß einer weiteren Modifikation kann ein Festlegen von zu überwachenden Nominalmoden in mindestens einer Frequenzklasse aus einem bestimmten Modenverlauf über einem oder mehreren Betriebsparametern und/oder über einem oder mehreren Umweltparametern durchgeführt werden. Gemäß einer weiteren Ausführungsform, welche mit anderen hierin beschriebenen Ausführungsformen kombiniert werden kann, können Nominalmoden durch Anpassen eines Polynoms einer vorgegebenen Ordnung an den Häufigkeitsverlauf festgelegt werden.

Ein Prozess gemäß einer weiteren Ausführungsform, welche mit ihren beschriebenen Ausführungsformen kombiniert werden kann, erfolgt in dem Kalibrier- und Modellierungsschritt 200, in dem die Eigenmoden auf Basis eines linearen Least-Squares-Prozesses modelliert werden, um jeweils ein Polynom eines beliebigen Grades an einzelne Modenverläufe anzupassen. Gemäß einer weiteren Modifikation davon ist es möglich, entweder nur den Frequenzverlauf oder auch den kombinierten Verlauf von Frequenz und Modenform über die einzelnen Parameter, d.h. Betriebsparameter und/oder Umweltparameter anzupassen.

Gemäß einer weiteren Ausführungsform, welche mit hierin beschriebenen Ausführungsformen kombiniert werden kann, erlaubt das Verfahren eine automatische Erkennung relevanter Eigenmoden und eine Bestimmung der Abhängigkeiten zwischen einzelnen Eigenmoden einerseits und Betriebs- (Operations-) und Umweltparametern (äußeren Einflüssen). In einer weiteren Modifikation davon erlaubt das Verfahren den Einbezug einer Erfassung einer Dämpfung und/oder eines Modenwinkels in einzelnen Frequenzklassen.

Gemäß hierin beschriebenen Ausführungsformen wird das Ergebnis einer Kalibrierung in Form von Koeffizienten einzelner Polynom bereitgestellt. Aus diesen Koeffizienten können dann zu jedem Zeitpunkt unter Verwendung der aktuellen Betriebsparameter und/oder der aktuellen Umweltparameter die zu erwartenden Werte für die Eigenfrequenzen, die Eigenmoden und die Dämpfungen sowie Modenwinkel berechnet werden. Hierbei wird die Wahl der Polynomordnung so getroffen, dass die aus allen Eigenmoden kombinierte, mittlere zu erwartende Standardabweichung minimiert wird. Die zu erwartende Standardabweichung wird mithilfe eines Prädiktionsbands der einzelnen Polynome berechnet und gemittelt.

Das Verfahren gemäß hierin beschriebenen Ausführungsformen gestattet es somit, schwingfähige Strukturen zu überwachen, ohne dass manuell bestimmte quasistatische Betriebsbereiche festgelegt werden müssen. Somit ist es nicht nötig, für einen einzelnen Betriebsbereich konstante Nominalmoden zu bestimmen. Das Verfahren gemäß hierin beschriebenen Ausführungsformen bietet somit eine erhebliche Zeitersparnis, da eine automatisierte oder zumindest teilweise automatisierte Kalibrierung der Nominalfrequenzen bei der Betriebsmodalanalyse bereitgestellt werden kann. Somit kann der kalibrierte Aufwand deutlich verringert werden. Lediglich eine kurze Kontrolle ist erforderlich, um zu überprüfen, ob die Kalibrierungsqualität ausreichend ist. Ferner ist es möglich, die Qualität der Kalibrierung zu verbessern und eine Möglichkeit bereitzustellen, Kalibrierungen automatisch zu aktualisieren. Somit kann eine Bestimmung von Nominalmoden und/oder Nominalfrequenzen in Abhängigkeit von den Betriebsparametern und/oder Umweltparametern durchgeführt werden, so dass eine Erkennung bzw. Überwachung von schwingfähigen Strukturen auf einfache Weise bereitgestellt wird.

Gemäß einer Ausführungsform, welche mit anderen hierin beschriebenen Ausführungsformen kombiniert werden kann, ist das schwingfähige System bzw. die schwingfähigen Struktur ein Rotorblatt einer Windenergieanlage.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Verfahren zum Ermitteln eines Modenverlaufs, wobei das Verfahren umfasst:
Erfassen (402) von Schwingungseigenmoden (103) eines schwingfähigen Systems in Abhängigkeit von mindestens einem Betriebsparameter (101) und/oder in Abhängigkeit von mindestens einem Umweltparameter (102) des schwingfähigen Systems in mindestens einem Betriebsbereich;
Erstellen (403) einer Häufigkeitsverteilung (202) der erfassten Schwingungseigenmoden (103) in Abhängigkeit einer Modenfrequenz und des mindestens einen Betriebsparameters (101) und/oder des mindestens einen Umweltparameters (102) in dem Betriebsbereich;
in Abhängigkeit von der erstellten Häufigkeitsverteilung (202), Einteilen (404) der Schwingungseigenmoden in Frequenzklassen, wobei das Einteilen (202) der Schwingungseigenmoden in Frequenzklassen durch Bestimmen eines Spitzenwerts derjenigen Häufigkeitsverteilung (202) von Eigenmoden (103) durchgeführt wird, welcher eine vorbestimmte Schwelle überschreitet und welcher eine Stetigkeit über den gesamten Betriebsbereich aufweist; und
in mindestens einer Frequenzklasse, Bestimmen (405) des Modenverlaufs über dem Betriebsparameter (101) und/oder über dem Umweltparameter (102).

2. Verfahren nach Anspruch 1, wobei der mindestens eine Betriebsparameter (101) des schwingfähigen Systems gewählt ist aus der Gruppe, welche besteht aus: einer Rotorgeschwindigkeit, einem Anstellwinkel eines Rotorblatts, einem Anströmwinkel, einem Pitchwinkel eines Rotorblatts, einem Yaw-Winkel einer Rotorgondel, einer Generatordrehzahl, einer Generatorleistung, und jedweder Kombination davon.

3. Verfahren nach Anspruch 1 oder 2, wobei der mindestens eine Umweltparameter (102) des schwingfähigen Systems gewählt ist aus der Gruppe, welche besteht aus: der Umgebungstemperatur, einem Eisbelag an einem Rotorblatt, einer Beaufschlagung eines Rotorblatts mit Fremdmaterial, einer Luftfeuchtigkeit, einem Winddruck, einer Windrichtung, einer Windgeschwindigkeit, einer Flächenbelastung an einem Rotorblatt, einem Anströmwinkel, einer Anströmgeschwindigkeit, einer Druckdifferenz, einer Rotorblatttemperatur, einer Rotorblattsteifigkeit, einer Rotorblattmassenverteilung, und j edweder Kombination davon.

4. Verfahren nach einem der vorhergehenden Ansprüche, wobei das Erfassen von Schwingungseigenmoden (103) des schwingfähigen Systems ein Erfassen von mindestens einem von folgenden Parametern umfasst: einer oder mehreren Eigenfrequenzen, Modenformen, Modenwinkeln und Dämpfungen.

5. Verfahren nach einem der vorhergehenden Ansprüche, ferner umfassend ein Festlegen von zu überwachenden Nominalmoden in mindestens einer Frequenzklasse aus dem bestimmten Modenverlauf über dem Betriebsparameter (101) und/oder über dem Umweltparameter (102).

6. Verfahren nach einem der vorhergehenden Ansprüche, wobei das Erstellen einer Häufigkeitsverteilung (200) das Erstellen eines Histogramms umfasst.

7. Verfahren nach Anspruch 6, wobei das Histogramm in unterschiedliche Frequenzklassen aufgeteilt ist.

8. Verfahren nach einem der vorhergehenden Ansprüche, wobei das schwingfähige System ein Rotorblatt einer Windenergieanlage ist.

9. Hardwaremodul, umfassend ein Computerprogramm, das ausgelegt ist, das Verfahren nach einem der Ansprüche 1 bis 8 durchzuführen.

## Claims

1. A method for determining a course of modes, wherein the method comprises:
detecting (402) oscillation eigenmodes (103) of an oscillatory system as a function of at least one operating parameter (101) and/or as a function of at least one environmental parameter (102) of the oscillatory system in at least one operating range;
creating (403) a frequency distribution (202) of the detected oscillation eigenmodes (103) as a function of a frequency of modes and the at least one operating parameter (101) and/or the at least one environmental parameter (102) in the operating range;
as a function of the created frequency distribution (202), classifying (404) the oscillation eigenmodes into frequency classes, wherein classifying (202) the oscillation eigenmodes into frequency classes is performed by determining a peak value of the frequency distribution (202) of eigenmodes (103) which exceeds a predetermined threshold and which has a steadiness over the complete operating range; and
in at least one frequency class, determining (405) the course of modes over the operating parameter (101) and/or over the environmental parameter (102).

2. The method according to claim 1, wherein the at least one operating parameter (101) of the oscillatory system is selected from the group consisting of: a rotor velocity, an angle of attack of a rotor blade, a flow angle, a pitch angle of a rotor blade, a yaw angle of a rotor nacelle, a generator speed, a generator power and any combination thereof.

3. The method according to claim 1 or 2, wherein the at least one environmental parameter (102) of the oscillatory system is selected from the group consisting of: the environmental temperature, an ice cover on a rotor blade, an impingement of a rotor blade with foreign material, an air humidity, a wind pressure, a wind direction, a wind velocity, a surface loading on a rotor blade, a flow angle, a flow velocity, a pressure differential, a rotor blade temperature, a rotor blade stiffness, a rotor blade mass distribution and any combination thereof.

4. The method according to any one of the preceding claims, wherein detecting oscillation eigenmodes (103) of the oscillatory system comprises detecting at least one of the following parameters: one or more eigenfrequencies, shapes of modes, angles of modes and attenuations.

5. The method according to any one of the preceding claims, further comprising setting nominal modes to be supervised in at least one frequency class of the determined course of modes over the operating parameter (101) and/or over the environmental parameter (102).

6. The method according to any one of the preceding claims, wherein creating a frequency distribution (200) comprises creating a histogram.

7. The method according to claim 6, wherein the histogram is classified into different frequency classes.

8. The method according to any one of the preceding claims, wherein the oscillatory system is a rotor blade of a wind energy plant.

9. A hardware module, comprising a computer program, which is adapted to perform the method according to any one of claims 1 to 8.

## Revendications

1. Procédé pour déterminer un tracé de mode, le procédé comprenant :
la détection (402) de modes propres d'oscillation (103) d'un système oscillatoire en fonction d'au moins un paramètre de fonctionnement (101) et/ou en fonction d'au moins un paramètre d'environnement (102) du système oscillatoire dans au moins une plage de fonctionnement ;
l'établissement (403) d'une distribution de périodicité (202) des modes propres d'oscillation détectés (103) en fonction d'une fréquence de mode et de l'au moins un paramètre de fonctionnement (101) et/ou de l'au moins un paramètre d'environnement (102) dans la plage de fonctionnement ;
en fonction de la distribution de périodicité (202) établie, la classification (404) des modes propres d'oscillation en classes de fréquence, dans lequel la classification (202) des modes propres d'oscillation en classes de fréquences a lieu par la détermination d'une valeur maximale de cette distribution de périodicité (202) de modes propres (103), laquelle valeur dépasse un seuil prédéterminé et laquelle valeur présente une continuité sur toute la plage de fonctionnement ; et
dans au moins une classe de fréquences, la détermination (405) du tracé de mode en fonction du paramètre de fonctionnement (101) et/ou en fonction du paramètre d'environnement (102).

2. Procédé selon la revendication 1, dans lequel l'au moins un paramètre de fonctionnement (101) du système oscillatoire est sélectionné dans le groupe constitué : d'une vitesse de rotor, d'un angle d'attaque d'une pale de rotor, d'un angle d'incidence, d'un angle de pas d'une pale de rotor, d'un angle de lacet d'une nacelle de rotor, d'une vitesse de générateur, d'une puissance de générateur et de toute combinaison de ceux-ci .

3. Procédé selon la revendication 1 ou 2, dans lequel l'au moins un paramètre d'environnement (102) du système oscillatoire est sélectionné dans le groupe constitué : de la température ambiante, d'une couche de glace sur une pale de rotor, d'une exposition d'une pale de rotor à des corps étrangers, d'une humidité de l'air, d'une pression du vent, d'une direction du vent, d'une vitesse du vent, d'une charge surfacique sur une pale de rotor, d'un angle d'incidence, d'une vitesse d'incidence, d'une différence de pression, d'une température de pale de rotor, d'une rigidité de pale de rotor, d'une distribution de masse de pale de rotor, et de toute combinaison de ceux-ci.

4. Procédé selon l'une des revendications précédentes, dans lequel la détection de modes propres d'oscillation (103) du système oscillatoire comprend la détection d'au moins l'un des paramètres suivants : une ou plusieurs fréquences propres, formes de mode, angles de mode et amortissements.

5. Procédé selon l'une des revendications précédentes, comprenant en outre la détermination de modes nominaux à surveiller dans au moins une classe de fréquence à partir du tracé de mode déterminé en fonction du paramètre de fonctionnement (101) et/ou en fonction du paramètre d'environnement (102).

6. Procédé selon l'une des revendications précédentes, dans lequel l'établissement d'une distribution de périodicité (200) comprend l'établissement d'un histogramme.

7. Procédé selon la revendication 6, dans lequel l'histogramme est divisé en différentes classes de fréquences.

8. Procédé selon l'une des revendications précédentes, dans lequel le système oscillatoire est une pale de rotor d'une installation d'éolienne.

9. Module matériel comprenant un programme informatique conçu pour mettre en œuvre le procédé selon l'une des revendications 1 à 8.
